# FASCICULE DE BREVET EUROPEEN

(11) **EP 3 526 493 B1**
(45) Date de publication et mention de la délivrance du brevet: **04.11.2020**
(21) Numéro de dépôt: 17780797.1
(22) Date de dépôt: 11.09.2017
(51) Int. Cl.: F16H 61/28, F16H 61/688

(54) **PROCÉDÉ ET DISPOSITIF D'APPRENTISSAGE DE POSITIONS DE DÉBUT DE CRABOTAGE D'ACTIONNEURS D'UNE BOÎTE DE VITESSES DCT D'UN VÉHICULE**
VERFAHREN UND VORRICHTUNG ZUM LERNEN VON EINGRIFFSSTARTPOSITIONEN VON AKTUATOREN EINES DOPPELKUPPLUNGSGETRIEBES (DCT) EINES FAHRZEUGS
METHOD AND DEVICE FOR LEARNING ENGAGEMENT STARTING POSITIONS OF ACTUATORS OF A DUAL-CLUTCH TRANSMISSION (DCT) OF A VEHICLE

(30) Priorité: 11.10.2016 FR 1659815
(43) Date de publication de la demande: 21.08.2019
(73) Titulaire: PSA Automobiles SA, 78300 Poissy (FR)
(72) Inventeur: SCHAEFFER, Eric, 75013 Paris (FR)
(86) Numéro de dépôt international: PCT/FR2017/052405
(87) Numéro de publication internationale: WO 2018/069589

(56) Documents cités:
- EP-A1- 1 887 258
- DE-A1- 19 953 937
- DE-C1- 19 939 819
- FR-A1- 2 979 405

## Description

L'invention concerne les véhicules comprenant une boîte de vitesses à double embrayage (ou DCT), et plus précisément l'apprentissage de positions d'actionneurs d'une telle boîte de vitesses, tel que connu de la publication DE 19953937 A1.

Comme le sait l'homme de l'art, une boîte de vitesses DCT comprend deux parties (parfois appelées « demies-boîtes de vitesses ») dédiées respectivement aux rapports pairs et aux rapports impairs.

Chaque partie de cette boîte de vitesses comprend un arbre primaire couplé à son propre embrayage et destiné à être couplé à au moins un arbre secondaire, et au moins un actionneur propre à agir sur un synchroniseur d'un arbre secondaire pour synchroniser la vitesse d'un pignon fou de ce dernier avec celle de l'arbre primaire dans une phase de synchronisation, et pour coupler ce pignon fou à l'arbre secondaire dans une phase de crabotage.

Grâce à cet agencement on peut engager simultanément les deux arbres primaires sur des rapports différents, afin de permettre des changements de rapport sous couple, c'est-à-dire sans interruption de l'accélération du véhicule. Un changement de rapport très rapide et sans rupture de couple s'effectue en deux étapes. Dans une première étape, lorsqu'un rapport pair ou impair est engagé dans la boîte de vitesses, le calculateur contrôlant cette dernière anticipe l'engagement du rapport suivant en présélectionnant un rapport impair ou pair. C'est ce que l'on appelle le « passage de la présélection ». Dans une seconde étape, lorsque certaines conditions sont réunies, le calculateur contrôle l'engagement du rapport suivant en provoquant la fermeture de l'embrayage qui est associé au rapport présélectionné et en ouvrant l'autre embrayage associé au rapport en cours d'engagement.

Chaque actionneur est associé à un capteur d'effort qui est destiné à mesurer l'effort qu'il exerce sur le synchroniseur associé, et un capteur de position chargé de déterminer à chaque instant sa position en cours par rapport à une position de référence. On peut ainsi piloter les différents synchroniseurs en position, en effort, ou en vitesse, selon la phase de fonctionnement dans laquelle ils sont impliqués.

Les différentes phases de fonctionnement d'un synchroniseur sont définies par un apprentissage des transitions entre le pilotage en position et le pilotage en effort durant un changement de rapport dans la partie de la boîte de vitesses qui est temporairement découplée du moteur du fait que l'embrayage associé est ouvert, alors même que l'autre partie de cette boîte de vitesses est couplée au moteur et transmet du couple aux roues.

Ce changement de rapport dans la partie de la boîte de vitesses qui est temporairement découplée du moteur ne doit perturber ni le comportement du véhicule, ni le conducteur par des bruits, des chocs, ou des craquements étant donné qu'il n'a rien demandé et que le moteur ne connait pas de variation de régime qui permette d'expliquer ces bruits, chocs ou craquements.

Pour éviter que de tels bruits, chocs ou craquements soient audibles, il est important que la phase de crabotage soit scrupuleusement respectée, ce qui nécessite une connaissance précise de la position dite « de début de crabotage » dans laquelle chaque actionneur doit être arrêté au début du crabotage.

Actuellement, l'apprentissage de la position de début de crabotage de chaque actionneur se fait en fonction de calculs des chaines de côtes. Ce mode d'apprentissage ne s'avère pas suffisamment satisfaisant, notamment du fait de la dispersion de ces chaines de côtes.

L'invention a donc notamment pour but d'améliorer la situation.

Elle propose notamment à cet effet un procédé destiné à permettre l'apprentissage de positions d'actionneurs dans une boîte de vitesses à double embrayage d'un véhicule, cette boîte de vitesses comprenant deux parties comportant chacune au moins un actionneur propre à agir sur un synchroniseur d'un arbre secondaire pour synchroniser la vitesse d'un pignon fou de ce dernier avec celle d'un arbre primaire couplé à un embrayage dans une phase de synchronisation, et pour coupler ce pignon fou à l'arbre secondaire dans une phase de crabotage.

Ce procédé comprend une étape dans laquelle, en cas de détection de la fin de la phase de synchronisation impliquant un actionneur et un synchroniseur dans l'une des parties de la boîte de vitesses :
- on déclenche le début de la phase de crabotage de ces actionneur et synchroniseur et on couple temporairement l'embrayage de cette partie à l'arbre primaire de cette partie afin de provoquer un arrêt de cet actionneur, puis
- on observe un effort exercé par cet actionneur sur ce synchroniseur, et lorsque l'effort satisfait à au moins une condition choisie on enregistre la position dans laquelle s'est arrêté cet actionneur en tant que position de début de crabotage.

On peut ainsi déterminer facilement, rapidement et très précisément la position de début de crabotage d'un actionneur d'une boîte de vitesses de type DCT.

Le procédé selon l'invention peut comporter d'autres caractéristiques qui peuvent être prises séparément ou en combinaison, et notamment :
- la condition choisie peut comprendre un effort compris pendant une durée prédéfinie dans un intervalle choisi inférieur à un effort maximal exercé sur le synchroniseur pendant la phase de synchronisation ;
- dans son étape on peut coupler temporairement l'embrayage à l'arbre primaire afin de lui communiquer un couple qui est fonction d'au moins un paramètre ; 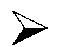 chaque paramètre peut être choisi dans un groupe comprenant (au moins) une valeur de démultiplication égale à un couple moteur transmis par l'autre partie de la boîte de vitesses multiplié par le rapport final cible et un couple d'entrée égal à un couple moteur transmis par l'autre partie de la boîte de vitesses (du fait de la fermeture de l'embrayage associé) ;
- on peut réitérer son étape pour chaque actionneur de chaque partie de la boîte de vitesses, afin de disposer d'un ensemble de positions de début de crabotage associées respectivement à tous les actionneurs de la boîte de vitesses.

L'invention propose également un dispositif d'apprentissage destiné à permettre l'apprentissage de positions d'actionneurs dans une boîte de vitesses à double embrayage d'un véhicule, cette boîte de vitesses comprenant deux parties comportant chacune au moins un actionneur propre à agir sur un synchroniseur d'un arbre secondaire pour synchroniser la vitesse d'un pignon fou de ce dernier avec celle d'un arbre primaire couplé à un embrayage dans une phase de synchronisation, et pour coupler ce pignon fou à l'arbre secondaire dans une phase de crabotage.

Ce dispositif d'apprentissage se caractérise par le fait qu'il est agencé, en cas de détection de la fin d'une phase de synchronisation impliquant un actionneur et un synchroniseur dans l'une des parties de la boîte de vitesses, pour déclencher la phase de crabotage de ces actionneur et synchroniseur, puis pour déclencher un couplage temporaire de l'embrayage de cette partie à l'arbre primaire associé afin de provoquer un arrêt de cet actionneur, puis pour observer un effort exercé sur ce synchroniseur, et lorsque cet effort satisfait à au moins une condition choisie pour enregistrer la position dans laquelle s'est arrêté cet actionneur en tant que position de début de crabotage.

L'invention propose également un calculateur comprenant un dispositif d'apprentissage du type de celui décrit ci-avant.

D'autres caractéristiques et avantages de l'invention apparaîtront à l'examen de la description détaillée ci-après, et des dessins annexés, sur lesquels :
- la figure 1 illustre schématiquement et fonctionnellement un exemple de boîte de vitesses de type DCT couplé à un calculateur équipé d'un dispositif d'apprentissage de positions selon l'invention,
- la figure 2 illustre schématiquement un exemple d'algorithme mettant en oeuvre un procédé d'apprentissage selon l'invention, et

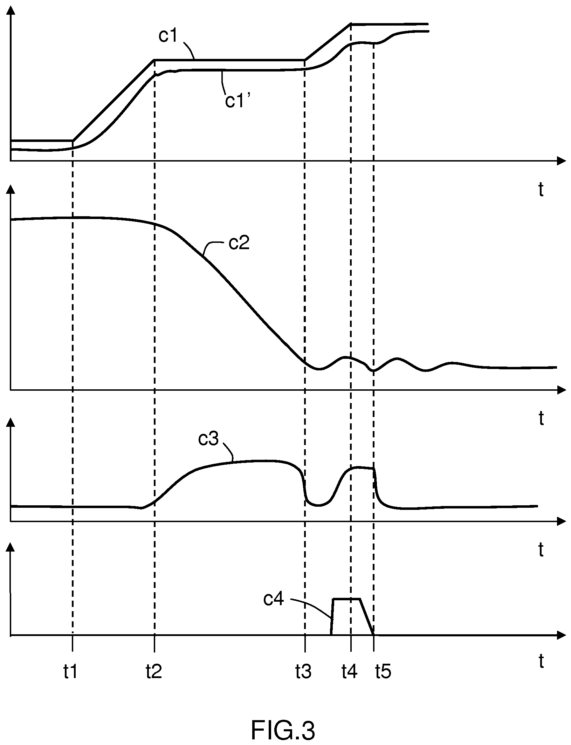

- la figure 3 illustre schématiquement au sein de quatre diagrammes un premier exemple d'évolution temporelle de la position d'un actionneur pendant des phases de synchronisation et de crabotage, un deuxième exemple d'évolution temporelle de la vitesse d'un arbre primaire pendant ces phases de synchronisation et de crabotage, un troisième exemple d'évolution temporelle de l'effort exercé par l'actionneur sur le synchroniseur associé pendant ces phases de synchronisation et de crabotage, et un quatrième exemple d'évolution temporelle du couple transmis à l'arbre primaire par l'embrayage associé pendant ces phases de synchronisation et de crabotage.

L'invention a notamment pour but de proposer un procédé, et un dispositif DA associé, destinés à permettre l'apprentissage des positions de début de crabotage des actionneurs ACj d'une boîte de vitesses BV de type DCT destinée à équiper un véhicule.

On considère dans ce qui suit, à titre d'exemple non limitatif, que le véhicule est de type automobile. Il s'agit par exemple d'une voiture. Mais l'invention n'est pas limitée à ce type de véhicule. Elle concerne en effet tout véhicule comprenant une boîte de vitesses de type DCT. Par conséquent, l'invention concerne notamment les véhicules terrestres (voitures, motocyclettes, véhicules utilitaires, cars (ou bus), camions, engins de voirie, engins de chantier, et engins de manutention).

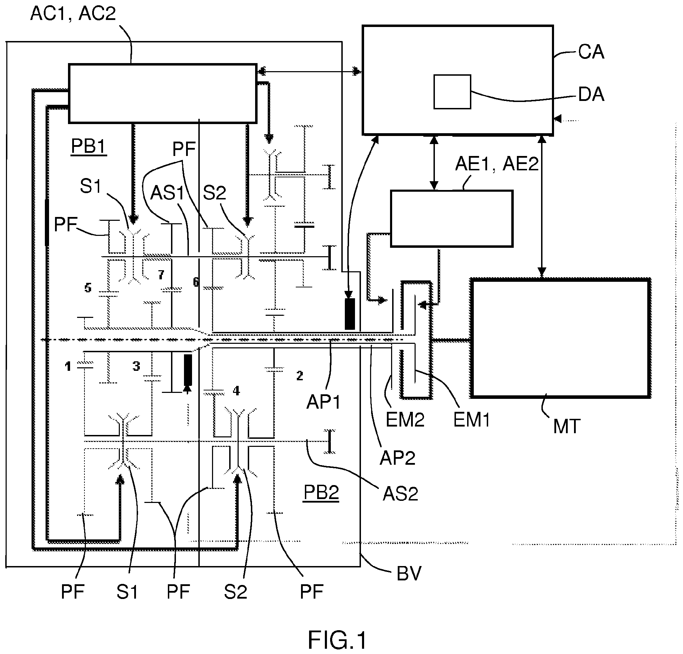

On a schématiquement représenté sur la figure 1 un exemple de boîte de vitesses BV de type DCT, couplé à un calculateur CA comprenant un dispositif d'apprentissage DA selon l'invention et à un moteur thermique MT via un double embrayage EM1, EM2. Par exemple, cette boîte de vitesses BV, ce calculateur CA, ce moteur thermique MT et ce double embrayage EM1, EM2 sont installés sur un banc d'essai dans un laboratoire. Mais ils pourraient être installés dans un véhicule, au moins en partie.

La boîte de vitesses BV étant à double embrayage (ou DCT), elle est subdivisée en deux parties (ou demies-boîtes) PBj (j = 1 ou 2) comprenant chacune un arbre primaire APj couplé à son propre embrayage EMj et destiné à être couplé à au moins un arbre secondaire ASk, et au moins un actionneur ACj propre à agir sur un synchroniseur Sj d'un arbre secondaire ASk pour synchroniser la vitesse d'un pignon fou PF de ce dernier (ASk) avec celle de l'arbre primaire APj dans une phase de synchronisation, et pour coupler ce pignon fou PF à l'arbre secondaire ASk dans une phase de crabotage.

On notera que dans l'exemple illustré non limitativement sur la figure 1, la boîte de vitesses BV comprend deux arbres secondaires ASk (k = 1 ou 2) qui font chacun partie des deux parties PBj et donc qui portent chacun au moins un synchroniseur S1 de la première partie PB1 et au moins un synchroniseur S2 de la seconde partie PB2. Mais d'autres agencements sont possibles, et notamment chaque partie PBj pourrait comprendre son propre arbre secondaire portant ses propres synchroniseurs Sj associés à ses actionneurs ACj.

Chaque actionneur ACj est agencé de manière à agir sur une fourchette (non illustrée) qui est elle-même propre à agir sur un synchroniseur Sj. Par ailleurs, chaque actionneur ACj est associé à un capteur de déplacement et un capteur d'effort (non illustrés). Un capteur d'effort est destiné à mesurer l'effort que son actionneur ACj exerce sur le synchroniseur Sj associé. Un capteur de position est chargé de déterminer à chaque instant la position en cours de son actionneur ACj par rapport à une position de référence. Cela permet de piloter les différents synchroniseurs Sj en position, en effort, ou en vitesse, selon la phase de fonctionnement dans laquelle ils sont impliqués.

Les embrayages EM1 et EM2 sont contrôlés par des actionneurs d'embrayage AE1 et EA2.

Comme indiqué précédemment, l'invention propose de mettre en œuvre un procédé destiné à permettre l'apprentissage des positions de début de crabotage des actionneurs ACj de la boîte de vitesses BV.

Ce procédé peut être mis en œuvre au moyen d'un dispositif d'apprentissage DA selon l'invention.

Dans l'exemple non limitatif illustré sur la figure 1, le dispositif d'apprentissage DA fait partie d'un calculateur CA qui est notamment couplé aux actionneurs ACj et aux différents capteurs (notamment d'effort, de position et de vitesse) de la boîte de vitesses BV, ainsi qu'aux actionneurs d'embrayage AEj. Mais cela n'est pas obligatoire. En effet, ce dispositif d'apprentissage DA pourrait être un équipement couplé à ce calculateur CA, directement ou indirectement, ou bien pourrait comprendre son propre calculateur couplé au calculateur CA, directement ou indirectement. Par conséquent, le dispositif d'apprentissage DA peut être réalisé sous la forme de modules logiciels (ou informatiques ou encore « software »), ou bien d'une combinaison de circuits électroniques (ou « hardware ») et de modules logiciels.

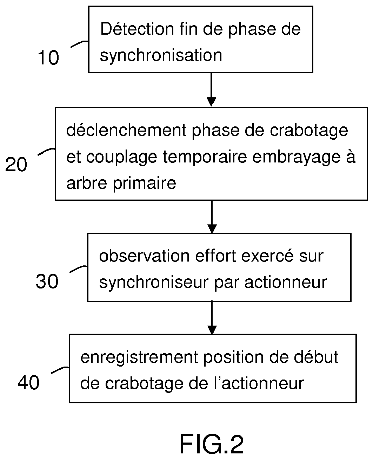

Le procédé, selon l'invention, commence lorsque la fin d'une phase de synchronisation, impliquant un actionneur ACj et un synchroniseur Sj dans l'une des parties PBj de la boîte de vitesses BV, est détectée. Cette première sous-étape (préliminaire) de l'étape du procédé est référencée 10 dans l'exemple d'algorithme de la figure 2.

Dans ce cas, on (le dispositif d'apprentissage DA) déclenche le début de la phase de crabotage de ces actionneur ACj et synchroniseur Sj et on couple temporairement l'embrayage EMj qui est associé à cette partie PBj à l'arbre primaire APj associé afin de fournir un couple à ce dernier (APj) propre à provoquer un arrêt de l'actionneur ACj.

Ce couplage temporaire est déclenché par le dispositif d'apprentissage DA. Il est rappelé qu'un couple résiduel entre le moteur MT et un synchroniseur Sj entraîne une impossibilité de déplacer l'actionneur ACj associé (c'est le principe de fonctionnement d'un synchroniseur dans les deux phases de synchronisation et de crabotage).

Cette deuxième sous-étape de l'étape du procédé est référencée 20 dans l'exemple d'algorithme de la figure 2.

On comprendra que le couple qui est fourni à l'arbre primaire APj concerné pendant le couplage temporaire de l'embrayage EMj est uniquement destiné à provoquer l'arrêt de l'actionneur ACj. Par conséquent, il n'a pas besoin d'être important. Par exemple, il peut être calibrable en fonction d'au moins un paramètre. Par exemple, chaque paramètre peut être choisi parmi au moins une valeur de démultiplication égale au couple moteur transmis par l'autre partie PBj de la boîte de vitesses BV multiplié par le rapport final cible, et un couple d'entrée égal au couple moteur transmis par l'autre partie PBj de la boîte de vitesses BV (du fait de la fermeture de l'embrayage EMj associé).

Puis, l'étape du procédé se poursuit par l'observation de l'effort qui est exercé sur le synchroniseur Sj par l'actionneur ACj concerné. Cette observation est réalisée par le dispositif d'apprentissage DA sur les mesures qui sont fournies par le capteur d'effort associé à l'actionneur ACj concerné. Cette troisième sous-étape de l'étape du procédé est référencée 30 dans l'exemple d'algorithme de la figure 2.

Finalement, lorsque l'effort observé satisfait à au moins une condition choisie, on (le dispositif d'apprentissage DA) enregistre la position dans laquelle s'est arrêté l'actionneur ACj considéré en tant que position de début de crabotage. Cette quatrième sous-étape de l'étape du procédé est référencée 40 dans l'exemple d'algorithme de la figure 2

Par exemple, la condition choisie peut comprendre un effort compris pendant une durée prédéfinie dans un intervalle choisi qui est inférieur à l'effort maximal qui est exercé sur le synchroniseur Sj par l'actionneur ACj pendant la phase de synchronisation.

A titre d'exemple purement illustratif, et donc non limitatif, la durée prédéfinie peut être comprise entre environ 10 ms et environ 80 ms. Cette durée prédéfinie peut être calibrable.

On notera que l'étape du procédé peut être réitérée pour chaque actionneur ACj de chaque partie PBj de la boîte de vitesses BV, afin de disposer d'un ensemble de positions de début de crabotage associées respectivement à tous les actionneurs ACj de cette boîte de vitesses BV. Cet ensemble peut ensuite être stocké dans le calculateur qui supervise le fonctionnement du groupe motopropulseur (ou GMP) de la chaîne de transmission du véhicule, afin d'être utilisé pour positionner chaque actionneur ACj lors de chaque phase de crabotage le concernant.

On a schématiquement illustré sur la figure 3, au sein de quatre diagrammes, un exemple non limitatif de comportements d'éléments de la boîte de vitesses BV et du double embrayage EM1 et EM2 associé lors de la mise en œuvre du procédé selon l'invention.

Le premier diagramme (le plus en haut) illustre un premier exemple d'évolution temporelle de la position d'un actionneur ACj pendant une phase de synchronisation suivie d'une phase de crabotage. La courbe C1 représente la consigne de position que doit suivre l'actionneur ACj. La courbe C1' représente la position mesurée de l'actionneur ACj.

Le deuxième diagramme illustre un deuxième exemple d'évolution temporelle de la vitesse c2 de l'arbre primaire APj qui est impliqué dans ces mêmes phases de synchronisation et de crabotage.

Le troisième diagramme illustre un troisième exemple d'évolution temporelle de l'effort c3 exercé par l'actionneur ACj sur le synchroniseur Sj associé pendant ces mêmes phases de synchronisation et de crabotage.

Le quatrième diagramme illustre un quatrième exemple d'évolution temporelle du couple c4 transmis à l'arbre primaire APj par l'embrayage EMj associé pendant ces mêmes phases de synchronisation et de crabotage.

Comme on peut l'observer sur ces diagrammes, à un instant t1 le dispositif d'apprentissage DA déclenche une phase de synchronisation impliquant un actionneur AC1 associé à un synchroniseur S1 au sein de la première partie PB1 de la boîte de vitesses BV, alors que la seconde partie PB2 de cette dernière (BV) est en train de fournir du couple produit par le moteur thermique MT. Les consignes de déplacement (c1) provoquent un déplacement (c1') de l'actionneur AC1 jusqu'à ce qu'il atteigne sa position de synchronisation à l'instant t2.

Puis, entre les instants t2 et t3, on procède à la synchronisation de la vitesse (c2) de l'arbre primaire AP1 avec celle d'un pignon fou PF de l'arbre secondaire ASk qui porte le synchroniseur S1 associé à l'actionneur AC1. L'effort (c3) exercé par l'actionneur AC1 sur ce synchroniseur S1 croît alors jusqu'à une valeur maximale.

A l'instant t3, on détecte la fin de la phase de synchronisation. Par conséquent, le dispositif d'apprentissage DA déclenche une phase de crabotage. Les consignes de déplacement (c1) provoquent alors un début de déplacement (c1') de l'actionneur AC1. Mais, après l'instant t3 et avant que ce dernier (AC1) atteigne sa position de début de crabotage (recherchée), le dispositif d'apprentissage DA déclenche un couplage temporaire du premier embrayage EM1 de la première partie PB1 à l'arbre primaire AP1. Ce déclenchement est obtenu au moyen de consigne(s) de couple (c4) adressée(s) à l'actionneur AE1 du premier embrayage EM1. Ce couplage temporaire provoque à l'instant t4 une augmentation de l'effort (c3) exercé par l'actionneur AC1 sur le synchroniseur S1, ce qui provoque un arrêt du déplacement (c1') de cet actionneur AC1.

Le dispositif d'apprentissage DA commence alors à l'instant t4 à observer l'effort (C3) exercé sur le synchroniseur S1 par l'actionneur AC1. Cette observation se fait ici jusqu'à l'instant t5. Si cet effort satisfait à au moins une condition choisie (par exemple, du fait qu'il est contenu pendant t5 - t4 dans un intervalle choisi inférieur à la valeur maximale de l'effort pendant la synchronisation), le dispositif d'apprentissage DA enregistre la position dans laquelle s'est arrêté l'actionneur AC1 en tant que position de début de crabotage. Si l'effort ne satisfait pas à au moins la condition choisie, la position en cours n'est pas enregistrée, et le dispositif d'apprentissage DA déclenche l'interruption de la phase de crabotage, puis recommence toute la procédure.

L'invention permet ainsi de déterminer facilement, rapidement et très précisément chaque position de début de crabotage de chaque actionneur d'une boîte de vitesses de type DCT.

## Revendications

1. Procédé d'apprentissage de positions d'actionneurs (ACj) dans une boîte de vitesses (BV) à double embrayage d'un véhicule, ladite boîte de vitesses (BV) comprenant deux parties (PBj) comportant chacune au moins un actionneur (ACj) propre à agir sur un synchroniseur (Sj) d'un arbre secondaire (ASk) pour synchroniser la vitesse d'un pignon fou (PF) de ce dernier (ASk) avec celle d'un arbre primaire (APj) couplé à un embrayage (EMj) dans une phase de synchronisation, et pour coupler ce pignon fou (PF) audit arbre secondaire (ASk) dans une phase de crabotage, **caractérisé en ce qu'**il comprend une étape (10-40) dans laquelle, en cas de détection de la fin de ladite phase de synchronisation impliquant un actionneur (ACj) et un synchroniseur (Sj) dans l'une desdites parties (PBj) de la boîte de vitesses (BV), on déclenche le début de ladite phase de crabotage de ces actionneur (ACj) et synchroniseur (Sj) et on couple temporairement ledit embrayage (EMj) de cette partie (PBj) audit arbre primaire (APj) associé afin de provoquer un arrêt dudit actionneur (ACj), puis on observe un effort exercé par ledit actionneur (ACj) sur ledit synchroniseur (Sj), et lorsque ledit effort satisfait à au moins une condition choisie on enregistre la position dans laquelle s'est arrêté ledit actionneur (ACj) en tant que position de début de crabotage.

2. Procédé selon la revendication 1, **caractérisé en ce que** ladite condition choisie comprend un effort compris pendant une durée prédéfinie dans un intervalle choisi inférieur à un effort maximal exercé sur ledit synchroniseur (Sj) pendant ladite phase de synchronisation.

3. Procédé selon l'une des revendications 1 et 2, **caractérisé en ce que** dans ladite étape on couple temporairement ledit embrayage (EMj) audit arbre primaire (APj) afin de lui communiquer un couple fonction d'au moins un paramètre.

4. Procédé selon la revendication 3, **caractérisé en ce que** chaque paramètre est choisi dans un groupe comprenant une valeur de démultiplication égale à un couple moteur transmis par l'autre partie (PBj) de la boîte de vitesses (BV) multiplié par le rapport final cible et un couple d'entrée égal à un couple moteur transmis par l'autre partie (PBj) de la boîte de vitesses (BV).

5. Procédé selon l'une des revendications 1 à 4, **caractérisé en ce que** l'on réitère ladite étape pour chaque actionneur (ACj) de chaque partie (PBj) de la boîte de vitesses (BV), afin de disposer d'un ensemble de positions de début de crabotage associées respectivement à tous les actionneurs (ACj) de ladite boîte de vitesses (BV).

6. Dispositif (DA) d'apprentissage de positions d'actionneurs (ACj) dans une boîte de vitesses (BV) à double embrayage d'un véhicule, ladite boîte de vitesses (BV) comprenant deux parties (PBj) comportant chacune au moins un actionneur (ACj) propre à agir sur un synchroniseur (Sj) d'un arbre secondaire (ASk) pour synchroniser la vitesse d'un pignon fou (PF) de ce dernier (ASk) avec celle d'un arbre primaire (APj) couplé à un embrayage (EMj) dans une phase de synchronisation, et pour coupler ce pignon fou (PF) audit arbre secondaire (ASk) dans une phase de crabotage, **caractérisé en ce qu'**il est agencé, en cas de détection de la fin de ladite phase de synchronisation impliquant un actionneur (ACj) et un synchroniseur (Sj) dans l'une desdites parties (PBj) de la boîte de vitesses (BV), pour déclencher ladite phase de crabotage de ces actionneur (ACj) et synchroniseur (Sj), puis pour déclencher un couplage temporaire dudit embrayage (EMj) de cette partie (PBj) audit arbre primaire (APj) associé afin de provoquer un arrêt dudit actionneur (ACj), puis pour observer un effort exercé sur ledit synchroniseur (Sj), et lorsque ledit effort satisfait à au moins une condition choisie pour enregistrer la position dans laquelle s'est arrêté ledit actionneur (ACj) en tant que position de début de crabotage.

7. Calculateur (CA), **caractérisé en ce qu'**il comprend un dispositif d'apprentissage (DA) selon la revendication 6.

## Patentansprüche

1. Verfahren zum Lernen von Aktuatorpositionen (ACj) in einem Doppelkupplungsgetriebe (BV) eines Fahrzeugs, wobei das Getriebe (BV) zwei Teile (PBj) umfasst, die jeweils mindestens einen Aktuator (ACj) umfassen in der Lage, auf einen Synchronisierer (Sj) einer Sekundärwelle (ASk) einzuwirken, um die Geschwindigkeit eines Leerlaufgetriebes (PF) des letzteren (ASk) mit der einer Primärwelle (APj) zu synchronisieren, die mit einer Kupplung gekoppelt ist (EMj) in einer Synchronisationsphase und zum Koppeln dieses Zwischenrads (PF) mit der Sekundärwelle (ASk) in einer Kupplungsphase, **gekennzeichnet dadurch, dass** es einen Schritt (10-40) umfasst, in dem im Falle einer Erfassung vom Ende der Synchronisationsphase, an der ein Aktuator (ACj) und ein Synchronisierer (Sj) in einem der Teile (PBj) des Getriebes (BV) beteiligt sind, wird der Beginn der Kupplungsphase dieser Aktuatoren ausgelöst (ACj) und Synchronisierer (Sj) und die Kupplung (EMj) dieses Teils (PBj) sind vorübergehend mit der Primärwelle gekoppelt re (APj) zugeordnet, um ein Anhalten des Aktuators (ACj) zu bewirken, wird eine von dem Aktuator (ACj) auf den Synchronisierer (Sj) ausgeübte Kraft beobachtet, und wenn die Kraft mindestens eine ausgewählte Bedingung erfüllt, wird die Position aufgezeichnet in dem der Aktuator (ACj) als Kupplungsstartposition angehalten hat.

2. Verfahren nach Anspruch 1, **dadurch gekennzeichnet, dass** die gewählte Bedingung eine Kraft umfasst, die für eine vordefinierte Dauer in einem gewählten Intervall enthalten ist, das kleiner ist als eine maximale Kraft, die während der Synchronisationsphase auf den Synchronisierer (Sj) ausgeübt wird.

3. Verfahren nach einem der Ansprüche 1 und 2, das **dadurch gekennzeichnet ist, dass** in dem Schritt die Kupplung (EMj) vorübergehend mit der Primärwelle (APj) gekoppelt ist, um ihr ein Drehmoment zu verleihen, das eine Funktion von mindestens einem Parameter ist.

4. Verfahren nach Anspruch 3, **dadurch gekennzeichnet, dass** jeder Parameter aus einer Gruppe ausgewählt ist, die einen Untersetzungswert umfasst, der einem vom anderen Teil (PBj) des Getriebes (BV) übertragenen Motordrehmoment multipliziert mit dem Zielendverhältnis entspricht und ein Eingangsdrehmoment gleich einem Motordrehmoment, das von dem anderen Teil (PBj) des Getriebes (BV) übertragen wird.

5. Verfahren nach einem der Ansprüche 1 bis 4, **dadurch gekennzeichnet, dass** der genannte Schritt für jeden Aktuator (ACj) jedes Teils (PBj) des Getriebes (BV) wiederholt wird, um einen Satz von zu haben Kupplungsstartpositionen, die jeweils allen Aktuatoren (ACj) des Getriebes (BV) zugeordnet sind.

6. Vorrichtung (DA) zum Lernen der Positionen von Aktuatoren (ACj) in einem Getriebe (BV) mit Doppelkupplung eines Fahrzeugs, wobei das Getriebe (BV) zwei Teile (PBj) umfasst, die jeweils mindestens einen Aktuator umfassen (ACj) kann auf einen Synchronisierer (Sj) einer Sekundärwelle (ASk) einwirken, um die Drehzahl eines Leerlaufritzels (PF) des letzteren (ASk) mit der einer Primärwelle (APj) zu synchronisieren, die mit dieser gekoppelt ist eine Kupplung (EMj) in einer Synchronisationsphase und zum Koppeln dieses Zwischenrads (PF) an die Sekundärwelle (ASk) in einer Kupplungsphase, die **dadurch gekennzeichnet ist, dass** sie angeordnet ist, im Falle der Erfassung des Endes dieser Synchronisationsphase mit einem Aktuator (ACj) und einem Synchronisierer (Sj) in einem der Teile (PBj) des Getriebes (BV), um die Kupplungsphase dieses Aktuators (ACj) und Synchronisierers (Sj) auszulösen. , dann eine vorübergehende Kopplung der Kupplung (EMj) dieses Teils (PBj) mit der zugeordneten Primärwelle (APj) auszulösen ie, um zu bewirken, dass der Aktuator stoppt (ACj), dann um eine auf den Synchronisierer (Sj) ausgeübte Kraft zu beobachten, und wenn diese Kraft mindestens eine Bedingung erfüllt, die ausgewählt wurde, um die Position aufzuzeichnen, in der der Aktuator gestoppt hat (ACj)) als Ausgangsposition der Kupplung.

7. Computer (CA), **dadurch gekennzeichnet, dass** er ein Lerngerät (DA) nach Anspruch 6 umfasst.

## Claims

1. Method for learning actuator positions (ACj) in a dual-clutch gearbox (BV) of a vehicle, said gearbox (BV) comprising two parts (PBj) each comprising at least one actuator (ACj) able to act on a synchronizer (Sj) of a secondary shaft (ASk) to synchronize the speed of an idle gear (PF) of the latter (ASk) with that of a primary shaft (APj) coupled to a clutch (EMj) in a synchronization phase, and to couple this idler gear (PF) to said secondary shaft (ASk) in a clutching phase, **characterized in that** it comprises a step (10-40) in which, in the event of detection of the end of said synchronization phase involving an actuator (ACj) and a synchronizer (Sj) in one of said parts (PBj) of the gearbox (BV), the start of said clutching phase of these actuators is triggered (ACj) and synchronizer (Sj) and temporarily couple said clutch (EMj) of this part (PBj) to said primary shaft re (APj) associated in order to cause a stop of said actuator (ACj), then a force exerted by said actuator (ACj) on said synchronizer (Sj) is observed, and when said force satisfies at least one chosen condition, the position is recorded in which said actuator (ACj) has stopped as the clutch start position.

2. Method according to Claim 1, **characterized in that** the said chosen condition comprises a force included for a predefined duration in a chosen interval less than a maximum force exerted on the said synchronizer (Sj) during the said synchronization phase.

3. Method according to one of claims 1 and 2, **characterized in that** in said step said clutch (EMj) is temporarily coupled to said primary shaft (APj) in order to impart to it a torque which is a function of at least one parameter.

4. Process according to Claim 3, **characterized in that** each parameter is chosen from a group comprising a gear reduction value equal to an engine torque transmitted by the other part (PBj) of the gearbox (BV) multiplied by the target final ratio and an input torque equal to an engine torque transmitted by the other part (PBj) of the gearbox (BV).

5. Method according to one of claims 1 to 4, **characterized in that** the said step is reiterated for each actuator (ACj) of each part (PBj) of the gearbox (BV), in order to have a set of clutch start positions associated respectively with all the actuators (ACj) of said gearbox (BV).

6. Device (DA) for learning the positions of actuators (ACj) in a gearbox (BV) with double clutch of a vehicle, said gearbox (BV) comprising two parts (PBj) each comprising at least one actuator (ACj) capable of acting on a synchronizer (Sj) of a secondary shaft (ASk) to synchronize the speed of an idle pinion (PF) of the latter (ASk) with that of a primary shaft (APj) coupled to a clutch (EMj) in a synchronization phase, and for coupling this idler gear (PF) to said secondary shaft (ASk) in a clutching phase, **characterized in that** it is arranged, in the event of detection of the end of said synchronization phase involving an actuator (ACj) and a synchronizer (Sj) in one of said parts (PBj) of the gearbox (BV), to trigger said clutch phase of these actuator (ACj) and synchronizer (Sj), then to trigger a temporary coupling of said clutch (EMj) of this part (PBj) to said primary shaft (APj) associated ié in order to cause said actuator to stop (ACj), then to observe a force exerted on said synchronizer (Sj), and when said force satisfies at least one condition chosen to record the position in which said actuator has stopped (ACj)) as the starting position of the clutch.

7. Computer (CA), **characterized in that** it comprises a learning device (DA) according to claim 6.
